Europäisches Patentamt

European Patent Office

Office européen des brevets

(19)

(11) Veröffentlichungsnummer: **0 210 159**

**B1**

(12) # EUROPÄISCHE PATENTSCHRIFT

(45) Veröffentlichungstag der Patentschrift:
14.12.88

(21) Anmeldenummer: **86890050.7**

(22) Anmeldetag: **10.03.86**

(51) Int. Cl.⁴: **F 27 B 1/04, C 04 B 2/12**

(54) Schachtofen zum Brennen von karbonathaltigem, mineralischem Brenngut.

(30) Priorität: **10.05.85 AT 1415/85**

(43) Veröffentlichungstag der Anmeldung:
**28.01.87 Patentblatt 87/5**

(45) Bekanntmachung des Hinweises auf die Patenterteilung:
**14.12.88 Patentblatt 88/50**

(84) Benannte Vertragsstaaten:
**BE CH DE FR GB IT LI LU NL SE**

(56) Entgegenhaltungen:
**DE-A-2 227 298**
**DE-A-2 317 303**
**DE-A-2 722 719**
**FR-A-1 464 839**

(73) Patentinhaber: **VOEST- ALPINE
INDUSTRIEANLAGENBAU GESELLSCHAFT
M.B.H., Turmstrasse 44, A-4020 Linz (AT)**

(72) Erfinder: **Nagl, Michael, Dipl.- Ing., Nöstlnach 91,
A-4501 St. Marien (AT)**
Erfinder: **Fugger, Gerhard, Anger 26, D-4201
Gramastetten (AT)**
Erfinder: **Mraz, Jaroslav, Am Sportplatz 4, A-4501
Neuhofen/Krems (AT)**
Erfinder: **Mailänder, Horst, Dip.- Ing., J.- W.
Kleinstrasse 36, A-4040 Linz (AT)**
Erfinder: **Rottenmanner, Ernst, Robert Stolz
Strasse 3, A-4020 Linz (AT)**
Erfinder: **Rauber, Norbert, Dipl.- Ing., Karl
Rennerstrasse 3, A-4040 Linz (AT)**
Erfinder: **Luger, Wolfgang, Ing.,
Preinsbacherstrasse 90, A-3300 Amstetten (AT)**

(74) Vertreter: **Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)**

LIBER, STOCKHOLM 1988

## Beschreibung

Die Erfindung bezieht sich auf einen Schachtofen zum Brennen von karbonathaltigem, mineralischem Brenngut in zwei parallelen Schächten, die über je einen Strömungskanal und eine Umschalteinrichtung abwechselnd an eine Frischluftleitung und an eine Abgasleitung anschließbar sind und einen Überströmkanal zwischen den beiden mit je einer Ringkammer im Überströmkanalbereich versehenen Schachtmänteln aufweisen.

Da bei Schachtöfen mit einer solchen Abgasführung die Verbrennungsgase aus dem einen Ofenschacht über den Überströmkanal in den anderen Schacht geleitet werden können, kann die Abwärme dieser Verbrennungsgase für das Vorwärmen des Brenngutes ausgenützt werden. Das Brenngut wird dabei in beiden Schächten in übereinstimmender Weise vorgewarmt und gebrannt, weil über eine Umschalteinrichtung die Schächte abwechselnd zum Brennen und Vorwärmen des Brenngutes eingesetzt werden.

Der für die Gasführung zwischen den beiden Schächten vorgesehene Überströmkanal erfordert allerdings bei bekannten Schachtöfen eine besondere Schachtausmauerung, die nicht nur eine entsprechende Einbindung der Ausmauerung des Überströmkanales, sondern auch eine sichere Abtragung der durch die Schachtteile oberhalb des Überströmkanales gebildeten Auflast gewährleistet. Um diesen Bedingungen zu genügen, müssen die oberen Schachtteile über aufwendige Mauerkonstruktionen am Mauerwerk des bis zum Überströmkanal reichenden unteren Schachtteiles abgestützt werden, der bei einer bekannten Konstruktion (DE-A-2 317 303) durch eine Erweiterung des Schachtmantels gebildet wird, in die eine den oberen Schachtmantel fortsetzende Ringwand ragt, so daß sich das Brenngut unterhalb der Ringwand abböscht und sich oberhalb der Böschung des Brenngutes eine Ringkammer zwischen dem äußeren Schachtmantel und der Ringwand ergibt. In dieser Ringkammer werden die Verbrennungsgase des einen Schachtes gesammelt und über den Überströmkanal in die Ringkammer des anderen Schachtes geleitet, um anschließend das Brenngut dieses Schachtes vorzuwärmen. Nachteilig bei dieser bekannten Konstruktion ist, daß die Ringwand auf Pfeilern des erweiterten Schachtmantels und auf diese Pfeiler überbrückenden Gewölben abgestützt werden muß, wobei ein Teil der Pfeiler dem heißen Brenngut ausgesetzt ist.

Um diesen Nachteil zu vermeiden, wurde vorgeschlagen (DE-A-2 722 719), die Ringwand in dem erweiterten Schachtmantel aufzuhängen, so daß in das Brenngut ragende Abstützungen vermieden werden können. Nachteilig bleibt jedoch, daß keine einheitlich über die gesamte Schachthöhe durchgehende Schachtausmauerung vorgesehen werden kann und ungünstige statische Verhältnisse hinsichtlich der Ofenarmierung in Kauf genommen werden müssen. Außerdem sind für die Schachtausmauerung im Bereich des Überströmkanales besonders geformte Ausmauerungssteine erforderlich, was den Herstellungsaufwand zusätzlich erhöht.

Der Erfindung liegt somit die Aufgabe zugrunde, diese Mangel zu vermeiden und einen Schachtofen der eingangs geschilderten Art so zu verbessern, daß mit einfachen Mitteln ein allen Anforderungen entsprechender Überströmkanal geschaffen werden kann, der keine besondere Schachtausmauerung verlangt.

Die Erfindung löst die gestellte Aufgabe dadurch, daß der Überströmkanal aus den beiden miteinander verbundenen, außen an den beiden durchgehenden Schachtmänteln angesetzten Ringkammern besteht, die mit den Schächten durch über den Umfang verteilte Durchströmöffnungen in den Schachtmänteln verbunden sind.

Durch diese außen an den durchgehenden Schachtmänteln angesetzten Ringkammern entfällt die Notwendigkeit einer aufwendigen Mauerkonstruktion zur Abstützung der oberen Schachtteile, weil die zylindrischen Schachtmäntel auch im Bereich des Überströmkanales entsprechend den übrigen Schachtteilen aufgebaut sein und eine über die gesamte Schachthöhe durchgehende zylindrische Ausmauerung aufweisen können. Diese durchgehende, zylindrische Mauerwerksführung im Bereich der Schachtmäntel macht besonders geformte Ausmauerungssteine weitgehend entbehrlich und stellt vorteilhafte Voraussetzungen für eine einfache Ofenbewehrung sicher. Die durchgehend zylindrische Schachtausmauerung gewährleistet außerdem eine gleichmäßige Sinkgeschwindigkeit für das Brenngut in allen Schachtzonen.

Die Verbindung zwischen den Ringkammern und dem Schachtinneren wird durch Durchströmöffnungen in den Schachtmänteln erreicht, was bei einer entsprechenden Umfangsverteilung der Durchströmöffnungen vorteilhafte Strömungsquerschnitte für den Überströmkanal sichert. Es ist daher lediglich für eine entsprechende Abstützung der Ringkammern an den Schachtmänteln zu sorgen.

Um eine gleichmäßige Kräfteverteilung im Bereich der Ringkammern zu erhalten, können die Ringkammern je aus einer den Schachtmantel mit Abstand umschließenden Ringwand bestehen, die an beiden Stirnseiten über je eine kegelstumpfförmige Verbindungswand am Schachtmantel abgestützt ist. Diese kegelstumpfförmigen Verbindungswände erlauben eine vorteilhafte Kraftüberleitung zwischen den Ringkammern und den Schachtmänteln, wobei horizontale Wandflächen weitgehend vermieden werden, so daß sich mit den Verbrennungsgasen mitgeführte Feststoffteilchen in den Ringkammern kaum absetzen können. In diesem Zusammenhang ist es günstig, die Durchströmöffnungen im Schachtmantel im Bereich der unteren kegelstumpfförmigen Verbindungswand anzuordnen, um das Rückfördern von sich aus dem Gasstrom absetzenden Feststoffteilchen entlang der kegelstumpfförmigen Verbindungswand in die Schächte zu unterstützen.

Dem gleichen Ziel dient auch die Maßnahme, in den Ringkammern zwischen den Durchströmöffnungen dachartige Erhebungen vorzusehen, die gegen den oberen Öffnungsrand der Durchströmöffnungen abfallen, so daß im Bereich der zylindrischen Ringwand aus dem Gasstrom ausscheidendes Gut entlang dieser dachartigen Erhebungen zu den Durchströmöffnungen im Schachtmantel geleitet wird.

Damit der tragende Querschnitt der zylindrischen Schachtmäntel trotz eines geforderten Strömungsquerschnittes für die Durchstromöffnungen nicht in unzulässiger Weise geschwächt wird, können die Durchströmöffnungen aus axialen Langlöchern bestehen, die entsprechend schmal ausgebildet werden.

In der Zeichnung ist der Erfindungsgegenstand beispielsweise dargestellt. Es zeigen

Fig. 1 einen erfindungsgemäßen Schachtofen in einer schematischen Vorderansicht,

Fig. 2 einen Axialschnitt durch die beiden Ofenschächte im Bereich des Überströmkanales in einem größeren Maßstab und

Fig. 3 einen Schnitt nach der Linie III - III der Fig. 2.

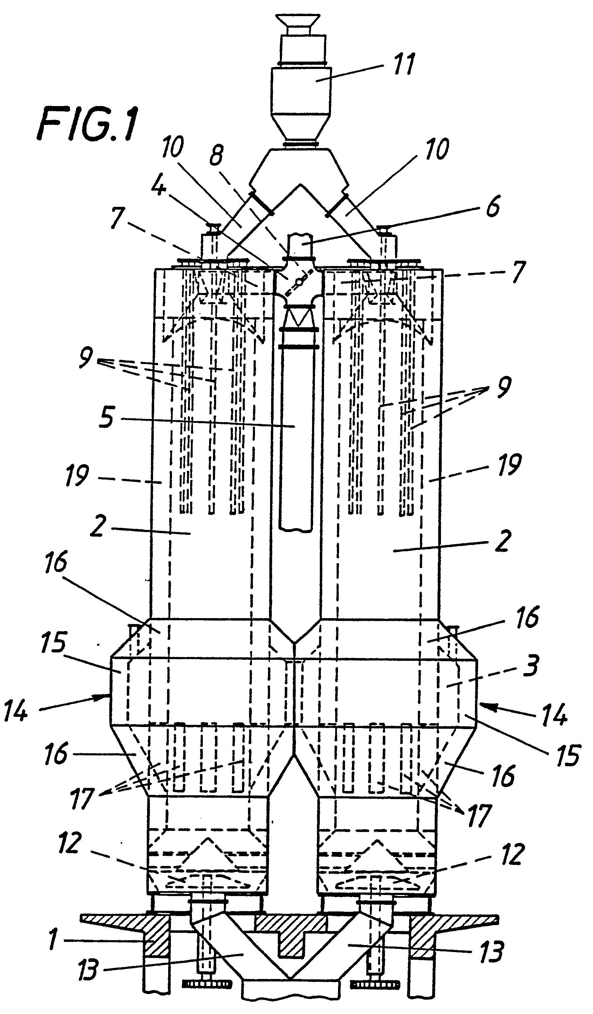

Wie der Fig. 1 entnommen werden kann, besteht der Schachtofen entsprechend dem dargestellten Ausführungsbeispiel aus zwei auf einem Gestell 1 aufruhenden Schächten mit je einem Schachtmantel 2, zwischen denen ein Überströmkanal 3 vorgesehen ist. Die Schächte können über eine Umschalteinrichtung 4 abwechselnd mit einer Frischluftleitung 5 und einer Abgasleitung 6 verbunden werden. Diese Umschalteinrichtung 4 besteht aus einem Gehäuse, an das einander diametral gegenüberliegend die Frischluftleitung 5 und die Abgasleitung 6 angeschlossen sind. Zwischen der Frischluftleitung 5 und der Abgasleitung 6 sind zwei je an einen Schacht angeschlossene Strömungskanäle 7 einander ebenfalls diametral gegenüberliegend mit dem Gehäuse der Umschalteinrichtung verbunden. Da im Gehäuse der Umschalteinrichtung 4 eine um die Gehäuseachse drehverstellbare, doppelflügelige Umschaltklappe 8 gelagert ist, die in den beiden Endstellungen jeweils die einander diametral gegenüberliegenden Leitungen 5 und 6 bzw. die Strömungskanäle 7 voneinander trennt, die Strömungskanäle 7 aber jeweils mit einer der beiden benachbarten Leitungen 5 und 6 verbindet, kann über die Umschalteinrichtung Verbrennungsluft aus der Frischluftleitung 5 über den angeschlossenen Strömungskanal 7 in den zugehörigen Schacht geleitet werden, um in diesem Schacht den über Brennstofflanzen 9 zugeführten Brennstoff verbrennen zu können. Die beim Verbrennen des Brennstoffes entstehenden Heißgase dienen zum Brennen des Brenngutes, das über Aufgabeleitungen 10 aus einem Beschickungsbehälter 11 abwechselnd in die beiden Schächte eingetragen wird.

Die Abwärme der Verbrennungsgase wird zum Vorwärmen des Brenngutes im anderen Schacht ausgenützt, indem sie aus dem die Brennzone bildenden Schacht über den Überströmkanal 3 in den anderen Schacht geleitet werden, wo sie ihre Restwärme im Gegenstrom an das Brenngut dieses Schachtes abgeben können. Die abgekühlten Abgase werden dann aus diesem Schacht über den angeschlossenen Strömungskanal 7 und die Umschalteinrichtung 4 in die Abgasleitung 6 weitergeleitet. Das Brenngut wird somit in der beschriebenen Weise in beiden Schächten abwechselnd vorgewärmt und gebrannt, wobei jeweils die Umschaltklappe 8 der Umschalteinrichtung 4 betätigt werden muß.

Das gebrannte Brenngut wird nach dem Durchlaufen einer Kühlzone mit Hilfe einer Austragsvorrichtung 12 ausgetragen und aus den beiden Schächten über geneigte Schurren 13 in einen gemeinsamen Austragsbehälter gefördert.

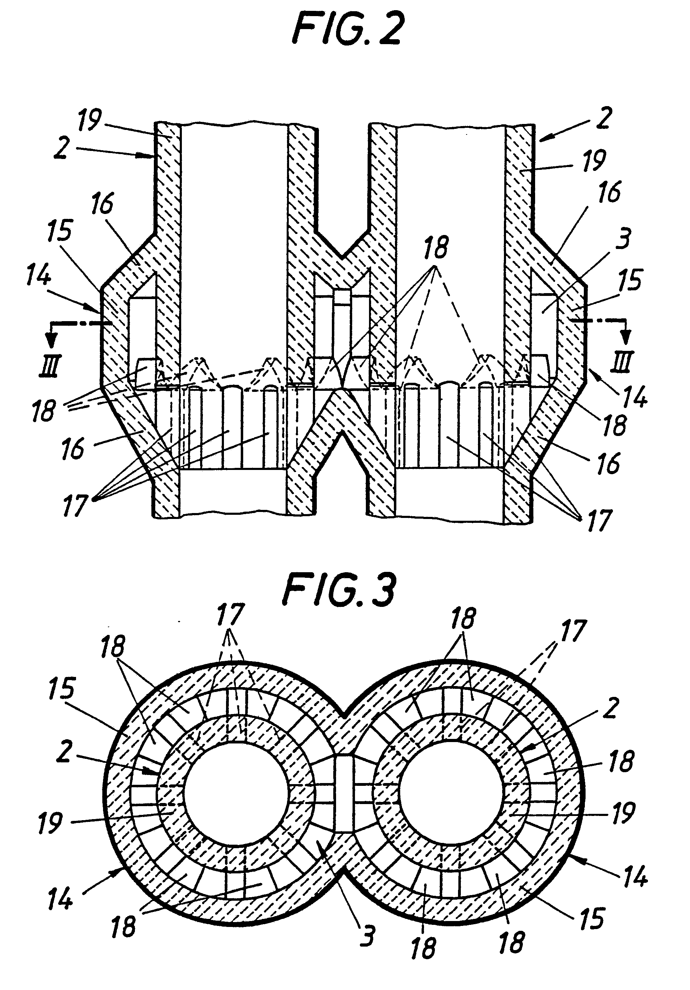

Um in konstruktiver und in strömungstechnischer Hinsicht für den Überströmkanal 3 vorteilhafte Verhältnisse zu schaffen, wird der Überströmkanal 3 durch zwei die beiden Schachtmäntel 2 konzentrisch umschließende Ringkammern 14 gebildet, die miteinander verbunden sind und jeweils aus einer zylindrischen Ringwand 15 und an den Stirnseiten dieser Ringwand 15 angesetzten, kegelstumpfförmigen Verbindungswänden 16 bestehen, mit deren Hilfe die Ringkammern 14 an den Schachtmänteln 2 abgestützt sind. Die Verbindung zwischen den Ringkammern 14 und dem Schacht inneren wird durch Durchströmöffnungen 17 in den Schachtmänteln 2 sichergestellt, wobei sich die aus axialen Langlöchern gebildeten Durchströmöffnungen 17 im Bereich der unteren kegelstumpfförmigen Verbindungswand 16 befinden. Durch diese Anordnung wird erreicht, daß sich im Bereich des Überströmkanales 3 aus den Verbrennungsgasen abscheidende Feststoffteilchen durch die Durchströmöffnungen 17 wieder in das Schachtinnere geleitet werden. Dem gleichen Zweck dienen auch dachartige Erhebungen 18, die in den Ringkammern 14 vorgesehen sind und gegen den oberen Öffnungsrand der Durchströmöffnungen 17 beidseitig abfallen, wie dies insbesondere der Fig. 2 zu entnehmen ist.

Durch das Vorsehen von die Schachtmäntel 2 außen umschließenden Ringkammern 14 für den Überströmkanal 3 wird eine zylindrische Ausmauerung 19 der Schachtmäntel 2 über die gesamte Schachthöhe erreicht, was eine sehr einfache Ofenkonstruktion mit einer vorteilhaften Ofenarmierung und einer günstigen Lastabtragung auch im Bereich des Überströmkanales 3 ergibt. Die kegelstumpfförmigen Wände 16 der Ringkammern 14 stellen dabei optimale Voraussetzungen für eine allen Anforderungen entsprechende Kraftübertragung zwischen der zylindrischen Schachtausmauerung 19 und der Ringkammer 14 dar.

Die einfachen geometrischen Formen gewährleisten nicht nur vorteilhafte Strömungsbedingungen im Bereich des Überströmkanales, sondern erlauben es außerdem, weitgehend einheitliche Ausmauerungssteine einzusetzen, was den Herstellungsaufwand erheblich verringert.

## Patentansprüche

1. Schachtofen zum Brennen von karbonathaltigem, mineralischem Brenngut in zwei parallelen Schächten, die über je einen Strömungskanal (7) und eine Umschalteinrichtung (4) abwechselnd an eine Frischluftleitung (5) und an eine Abgasleitung (6) anschließbar sind und einen Überströmkanal (3) zwischen den beiden mit je einer Ringkammer (14) im Überströmkanalbereich versehenen Schachtmänteln (2) aufweisen, dadurch gekennzeichnet, daß der Überströmkanal (3) aus den beiden miteinander verbundenen, außen an den beiden durchgehenden Schachtmänteln (2) angesetzten Ringkammern (14) besteht, die mit den Schächten durch über den Umfang verteilte Durchströmöffnungen (17) in den Schachtmänteln (2) verbunden sind.

2. Schachtofen nach Anspruch 1, dadurch gekennzeichnet, daß die Ringkammern (14) je aus einer den Schachtmantel (2) mit Abstand umschließenden Ringwand (15) bestehen, die an beiden Stirnseiten über je eine kegelstumpfförmige Verbindungswand (16) am Schachtmantel (2) abgestützt ist.

3. Schachtofen nach den Ansprüchen 1 und 2, dadurch gekennzeichnet, daß die Durchströmöffnungen (17) im Schachtmantel (2) im Bereich der unteren kegelstumpfförmigen Verbindungswand (16) angeordnet sind.

4. Schachtofen nach einem der Ansprüche 1 bis 3, dadurch gekennzeichnet, daß die Ringkammern (14) zwischen den Durchströmöffnungen (17) angeordnete, dachartige Erhebungen (18) aufweisen, die beidseitig gegen den oberen Öffnungsrand der Durchströmöffnungen (17) abfallen.

5. Schachtofen nach einem der Ansprüche 1 bis 4, dadurch gekennzeichnet, daß die Durchströmöffnungen (17) aus axialen Langlöchern bestehen.

## Claims

1. A shaft furnace for firing carbonate-containing mineral material which is to be fired in two parallel shafts, each of which is adapted to be connected to a fresh-air line (5) and an exhaust gas line (6) in alternation via an associated flow passage (7) and a change-over device (4), and which are provided with an overflow passage (3) between the two shaft shells (2), which are provided with respective annular chambers (14) adjacent to the overflow passage, characterized in that the overflow passage (3) consists of the two annular chambers (14), which are interconnected and adjoin the two continuous shaft shells (2) on the outside and communicate with the shafts through flow passage openings (17), which are formed in the shaft shells (2) and distributed around the periphery.

2. A shaft furnace according to claim 1, characterized in that each annular chamber (14) consists of an annular wall (15), which is spaced around the shaft shell (2) and which is supported at both ends via respective frustoconical connecting walls (16) on the shaft shell (2).

3. A shaft furnace according to claims 1 and 2, characterized in that the flow passage openings (17) in the shaft shell (2) are disposed adjacent to the lower frustoconical connecting wall (16).

4. A shaft furnace according to any of claims 1 to 3, characterized in that the annular chambers (14) comprise roof-like elevations (18), which are disposed between the flow passage openings (17) and slope on both sides towards the top rims of the flow passage openings (17).

5. A shaft furnace according to any of claims 1 to 4, characterized in that the flow passage openings (17) consist of axial slots.

## Revendications

1. Four droit pour brûler une matière combustible minérale contenant du carbonate dans deux cuves parallèles qui peuvent être raccordées alternativement, chacune par un conduit (7) et par l'intermédiaire d'un dispositif inverseur (4), à une conduite d'air frais (5) et à une conduite de gaz d'échappement (6), et qui présentent un conduit de transfert (3) entre les deux enveloppes (2) de cuve qui sont munies chacune d'une chambre annulaire (14) dans la région du conduit de transfert, caractérisé par le fait que le conduit de transfert (3) est composé des deux chambres annulaires (14), reliées l'une à l'autre, montées extérieurement contre les deux enveloppes ininterrompues (2) de cuve, qui sont reliées aux cuves par des ouvertures de passage (17) ménagées dans les enveloppes (2) des cuves et réparties sur la périphérie.

2. Four droit selon la revendication 1, caractérisé par le fait que les chambres annulaires (14) sont constituées chacune par une paroi annulaire (15) qui entoure l'enveloppe (2) de la cuve à une certaine distance de celle-ci et qui prend appui sur l'enveloppe (2) de la cuve par une paroi de raccordement tronconique (16) au niveau de chacune de ses faces terminales.

3. Four droit selon les revendications 1 et 2, caractérisé par le fait que les ouvertures de passage (17), formées dans l'enveloppe (2) de la cuve, sont prévues dans la région de la paroi de raccordement tronconique (16) inférieure.

4. Four droit selon l'une des revendications 1 à 3, caractérisé par le fait que les chambres annulaires (14) présentent des protubérances (18) en forme de toit disposées entre les ouvertures de passage (17) et dont les pentes descendent des deux côtés vers le bord supérieur des ouvertures de passage (17).

5. Four droit selon l'une des revendications 1 à 4, caractérisé par le fait que les ouvertures de passage (17) sont constituées par des trous oblongs axiaux.

FIG.1

0 210 159

FIG.2

FIG.3